# EUROPEAN PATENT APPLICATION

(11) **EP 4 813 727 A1**
(43) Date of publication of application: **30.09.2026**
(21) Application number: 26160736.0
(22) Date of filing: 25.02.2026
(51) Int. Cl.: B60L 50/51, B60L 50/60, B60L 53/16

(54) **ELECTRONIC DRIVE CONTROL SYSTEM AND ELECTRIC VEHICLE**

(30) Priority: 27.03.2025 CN 202520567442 U
(71) Applicant: Volkswagen Group (China) Technology Company Limited, Hefei Anhui 230091 (CN)
(72) Inventor: GUO, Kai, HEFEI 2390091 (CN); WANG, Shuna, HEFEI 2390091 (CN); ZHENG, Chun, HEFEI 2390091 (CN); WANG, Ning, HEFEI 2390091 (CN)
(74) Representative: Zimmermann & Partner Patentanwälte mbB

(57) **Abstract**

The present application provides an electronic drive control system (100) and an electric vehicle. The electronic drive control system (100) comprises: a power assembly (130), and an integrated control module that integrates a battery management unit, a vehicle control unit, and a control unit of the power assembly (130) into one chip; the vehicle control unit connects the battery management unit to the control unit of the power assembly (130), the battery management unit is communicatively connected to the battery assembly (200) of the electric vehicle, and the control unit of the power assembly (130) is electrically connected to the power assembly (130); the power assembly (130) is electrically connected to a motor (300) of an electric vehicle. Through the above solution, the communication lines may be simplified, and the cost may be reduced

## Description

### FIELD

The present application relates to the technical field of vehicles, and particularly to an electronic drive control system and an electric vehicle.

### BACKGROUND

The power electronics design of electric vehicles plays a crucial role in the efficiency and performance of electric vehicles. Currently, more and more electric vehicles use a centralized computing architecture of an EEA (Electrical/Electronic Architecture) to integrate some controllers together to reduce the cost.

At present, traditional electric vehicles typically employ physical-level control integration, where each ECU (Electronic Control Unit) uses a separate microcontroller unit (MCU). The communication among a plurality of microcontroller units causes complex communication lines and high cost.

### SUMMARY

The present application provides an electronic drive control system and an electric vehicle, to solve the above technical problems in the prior art.

According to a first aspect of the present application, there is provided an electronic drive control system comprising: a power assembly, and an integrated control module that integrates a battery management unit, a vehicle control unit, and a control unit of the power assembly into one chip;
the vehicle control unit connects the battery management unit to the control unit of the power assembly, the battery management unit is communicatively connected to the battery assembly of the electric vehicle, and the control unit of the power assembly is electrically connected to the power assembly; the power assembly is electrically connected to a motor of an electric vehicle.

In some embodiments, the power assembly comprises an inverter, and the control unit of the power assembly comprises an inverter control unit;
the inverter control unit is electrically connected to the inverter, and the inverter is connected to a motor of the electric vehicle.

In some embodiments, the power assembly further comprises a DC-DC converter, and the control unit of the power assembly comprises a DC-DC converter control unit;
the DC-DC converter control unit is electrically connected to the DC-DC converter, and the DC-DC converter is connected to a low-voltage component of the electric vehicle.

In some embodiments, the electronic drive control system further comprises an on-board charger assembly communicatively connected to the vehicle control unit.

In some embodiments, the electronic drive control system further comprises a first CAN communication line through which the on-board charger assembly is communicatively connected to the vehicle control unit.

In some embodiments, the electronic drive control system further comprises a second CAN communication line through which the battery management unit is communicatively connected to the battery assembly of the electric vehicle.

In some embodiments, the electronic drive control system further comprises a third CAN communication line through which the vehicle control unit is connected to a central control system of the electric vehicle.

In some embodiments, the electronic drive control system further comprises a fourth CAN communication line;
the vehicle control unit is connected to a DC charger socket of the electric vehicle through the fourth CAN communication line.

In some embodiments, the integrated control module is an MCU chip.

According to a second aspect of the present application, there is provided an electric vehicle comprising the above-described electronic drive control system.

In summary, the electronic drive control system and the electric vehicle according to the present application have at least the following advantageous effects:

A plurality of functions are integrated in one chip by using the integrated control module that integrates the battery management unit, the vehicle control unit, and the control unit of the power assembly. As compared with the prior art in which functions correspond to separate control chips, the present application may omit the communication between the originally separate control chips, thereby simplifying the communication lines and reducing the use of chips and thereby lowering the cost.

### BRIEF DESCRIPTION OF THE DRAWINGS

The figures to be used in describing specific embodiments or the prior art will be introduced briefly to illustrate specific embodiments of the present application or technical solutions in the prior art more clearly. Obviously, the figures described below show some embodiments of the present application. Those skilled in the art can also obtain other figures or solutions according to these figures without making any inventive efforts.
FIG. 1 illustrates a block diagram of an electronic drive control system according to one embodiment of the present application;
FIG. 2 illustrates a topology diagram of an electronic drive control system according to one embodiment of the present application;
FIG. 3 illustrates a topology diagram of a conventional electronic drive control system.

### DETAILED DESCRIPTION OF EMBODIMENTS

In the description of the present application, it is to be understood that the terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", if any, indicate directional or positional relationships, and are to be understood based on the directional or positional relationships shown in the drawings for convenience of description and simplicity of the present application unless otherwise indicated, and do not indicate or imply that devices or elements referred to must have specific directions, be constructed and operated in specific directions, and therefore should not be construed as limiting the present application.

Furthermore, the presence of features defined with "first" and "second" for descriptive purposes only is not to be construed as indicating or implying relative importance or as implicitly indicating the number of technical features indicated. The features defined with "first" and "second" may explicitly or implicitly comprise at least one of the defined features. Where "a plurality" appears, it is generally intended to include at least two, e.g., two, three, etc. unless specifically limited otherwise.

In the present application, the terms such as "mount", "couple", "connect", and "fix" are to be construed broadly unless expressly stated otherwise. For example, "connect" may be a fixed connection, a detachable connection, or an integral connection; it may be a mechanical connection or an electrical connection, a direct connection or an indirect connection through an intermediate medium, a communication between interiors of two elements, or an interaction relationship between two elements. The specific meanings of the above terms in the present application can be understood by those skilled in the art according to specific situations.

In the description herein, the terms such as "one embodiment", "some embodiments", "examples", "specific examples", or "some examples", if any, are intended to refer to specific features, structures, materials, or characteristics described in conjunction with the embodiment or example as being included in at least one embodiment or example of the present application. In this specification, schematic representations of the above terms do not necessarily refer to the same embodiment or example. Furthermore, the specific features, structures, materials, or characteristics described may be combined in any suitable manner in any one or more embodiments or examples. Furthermore, different embodiments or examples described in this specification, as well as the features of different embodiments or examples, may be combined and integrated by those skilled in the art without conflict.

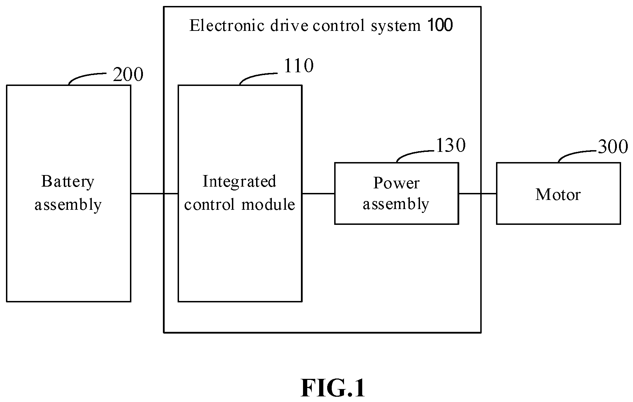

In one embodiment of the present application, there is provided an electronic drive control system. As shown in FIG. 1, an electronic drive control system 100 comprises an integrated control module 110 and a power assembly 130. The integrated control module 110 is a control chip, specifically, the integrated control module 110 integrates a battery management unit, a vehicle control unit, and a control unit of the power assembly. The battery management unit, the vehicle control unit and the control unit are functional units inside the integrated control module 110 and may implement corresponding functions. Specifically, the battery management unit is a functional unit corresponding to a BMS (Battery Management Unit) chip for implementing the function of the BMS chip; the vehicle control unit is a functional unit corresponding to a VCU (Vehicle Control Unit) chip for implementing the function of the VCU chip; the control unit of the power assembly is a functional unit for implementing the control function of the power assembly. For example, the integrated control module 110 may be enabled to integrate functions of the respective functional units by burning software programs of the respective functional units on the integrated control module 110. The functions of a plurality of functional units are integrated into one control chip for implementation, and the control chip is disposed on a PCBA (Printed Circuit Board Assembly).

The power assembly 130 is an assembly comprising a power semiconductor device. For example, the power assembly 130 may comprise an inverter, and may further comprise a DC-DC converter, etc. Specifically, the vehicle control unit in the integrated control module 110 connects the battery management unit to the control unit of the power assembly; wherein the battery management unit is communicatively connected to a battery assembly 200 of the electric vehicle to communicate with the battery assembly 200. For example, battery assembly 200 may be a high-voltage battery assembly. The control unit of the power assembly in the integrated control module 110 is electrically connected to the power assembly 130 to control the operation of the power assembly 130. The power assembly 130 is electrically connected to a motor 300 of the electric vehicle.

In the prior art, the battery management unit, the vehicle control unit, and the control unit of the power assembly all employ separate control chips, specifically, the BMS chip, the VCU chip and the control chip of the power assembly, respectively; the BMS chip needs to communicate with the battery assembly 200 and with the VCU chip, and the VCU chip needs to communicate with the control chip of the power assembly and with other modules of the electric vehicle. The communication lines are numerous and complex, and the use of multiple control chips incurs a high cost.

In the electronic drive control system according to the present application, the battery management unit in the integrated control module 110 communicates with the battery assembly 200, and the control unit of the power assembly in the integrated control module 110 is electrically connected to the power assembly 130. A plurality of functions are integrated into one chip by employing the integrated control module 110 integrating the battery management unit, the vehicle control unit, and the control unit of the power assembly. As compared with the prior art in which functions correspond to separate control chips, the present application may omit the communication between the originally separate control chips, thereby simplifying the communication lines and reducing the use of chips and thereby lowering the cost.

Specifically, the integrated control module 110 may be an MCU chip. Multiple types of functional units are integrated in one MCU chip, and the one MCU chip employs one PCBA so that a plurality of functions are integrated into the single PCBA through the one MCU chip, thereby simplifying the communication lines and saving the cost.

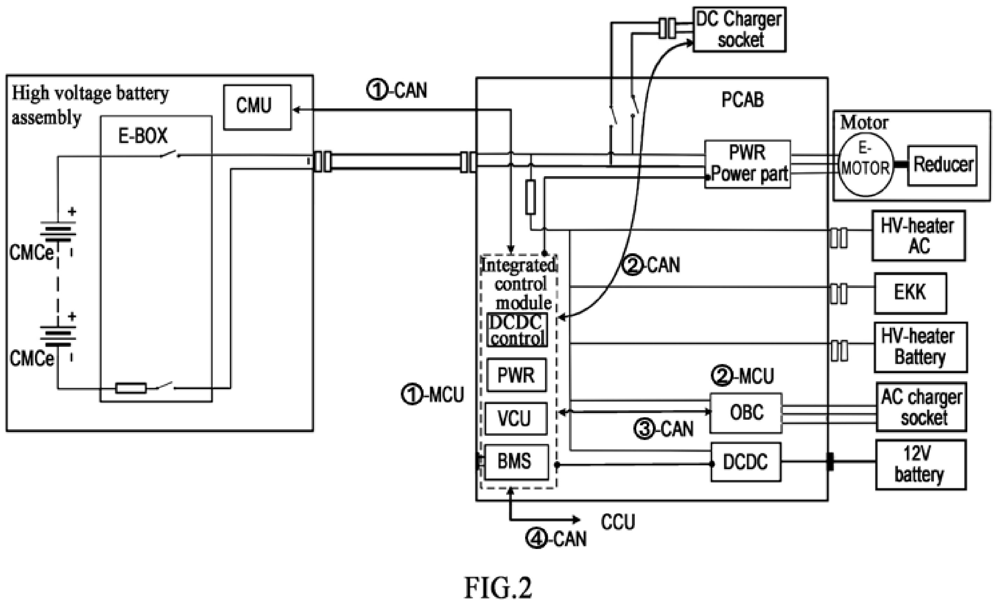

In some embodiments, as illustrated in FIG. 2, the power assembly 130 comprises an inverter (a PWR Power part in FIG. 2) and the control unit of the power assembly 130 comprises an inverter control unit (PWR in FIG. 2); the inverter control unit in the integrated control module 110 is electrically connected to the inverter which is connected to the motor 300 of the electric vehicle.

The inverter control unit is a functional unit implementing the function of controlling the inverter. The communication lines may be simplified and the cost may be saved by integrating the function of controlling the inverter in the integrated control module 110 without need to use a separate control chip to control the inverter.

Specifically, the VCU in FIG. 2 represents the vehicle control unit integrated in the integrated control module 110, and the BMS represents a battery management unit integrated in the integrated control module 110. As shown in FIG. 2, the battery assembly 200 is a high-voltage battery assembly, and may comprise a battery pack (CM Ce), a peripheral circuit (E-BOX) connected to the battery pack, and a battery monitoring chip (CMU), wherein the battery pack is electrically connected to the inverter via the peripheral circuit, and is also used for electrically connecting to other devices of the electric vehicle, such as a high-voltage heater (HV-heater AC) of an air-conditioning system, an electric air-conditioning compressor (EKK), a battery high-voltage heater (HV-heater Battery), etc.; the battery monitoring chip is communicatively connected to the battery management unit in the integrated control module 110.

In some embodiments, as shown in FIG. 2, the power assembly 130 further comprises a DC-DC converter (DCDC in FIG. 2), and the control unit of the power assembly comprises a DC-DC converter control unit (DC-DC control in FIG. 2); the DC-DC converter control unit in the integrated control module 110 is electrically connected to the DC-DC converter, and the DC-DC converter is connected to a low voltage component of the electric vehicle for providing direct current to the low voltage component. For example, the low voltage component may be a 12V battery (12V battery in FIG. 2).

The DC-DC converter control unit is a functional unit for implementing the function of controlling the DC-DC converter. The communication lines may be further simplified and the cost may be saved by integrating the function of controlling the DC-DC converter in the integrated control module 110 without need to use a separate control chip to control the DC-DC converter.

In some embodiments, as shown in FIG. 2, the electronic drive control system further comprises an on-board charger (OBC) assembly communicatively connected to the vehicle control unit in the integrated control module 110. Specifically, the on-board charger assembly comprises an on-board charger and an on-board charger control chip; the on-board charger control chip is connected to the vehicle control unit in the integrated control module 110 via a communication line, and is electrically connected to the on-board charger for controlling the operation of the on-board charger; the on-board charger is connected to an AC charger socket of the electric vehicle, the AC charger socket is connected to an external AC charging device, and the on-board charger may convert an input AC into a DC for charging the battery pack in the battery assembly 200.

Specifically, as shown in FIG. 2, the integrated control module 110, the inverter, the on-board charger assembly, and the DC-DC converter may be provided in one region, for example, may be provided in one circuit board or an electrical framework.

Further, the electronic drive control system further comprises a first CAN communication line, for example, ③-CAN in FIG. 2 is the first CAN communication line, and the on-vehicle charger assembly is communicatively connected to the vehicle control unit in the integrated control module 110 through the first CAN communication line.

The first CAN communication line supports CAN communication. With the first CAN communication line being used to connect the on-board charger assembly with the vehicle control unit of the integrated control module 110, the integrated control module 110 conveniently performs CAN communication with the on-board charger assembly. Specifically, the on-board charger control chip in the on-board charger assembly is connected to the vehicle control unit of the integrated control module 110 through the first CAN communication line.

In some embodiments, the electronic drive control system further comprises a second CAN communication line. For example, ①-CAN in FIG. 2 is the second CAN communication line, and the battery management unit in the integrated control module 110 is communicatively connected to the battery assembly 200 of the electric vehicle via the second CAN communication line, thereby facilitating CAN communication between the integrated control module 110 and the battery assembly 200. Specifically, the battery management unit of the integrated control module 110 is communicatively connected to the battery monitoring chip (CMU) through the second CAN communication line.

In some embodiments, the electronic drive control system also comprises a third CAN communication line, for example, ④-CAN in FIG. 2 is the third CAN communication line. The vehicle control unit in the integrated control module 110 is connected to a central control system of the electric vehicle through the third communication line, thereby facilitating CAN communication between the integrated control module 110 and the central control system. Specifically, the central control system may include a central control chip CCU for managing and controlling an intelligent system, infotainment, etc. of the vehicle, and the vehicle control unit of the integrated control module 110 is connected to the central control chip through the third communication line.

In some embodiments, the electronic drive control system further comprises a fourth CAN communication line, for example, ②-CAN in FIG. 2 is the fourth CAN communication line. The vehicle control unit in the integrated control module 110 is connected to a DC charger socket (DC Charger socket in FIG. 2) of the electric vehicle through the fourth CAN communication line. The DC charger socket is used for connecting an external direct current charging apparatus. With the fourth CAN communication line connecting the integrated control module 110 to the DC charger socket, the integrated control module 110 conveniently communicates with the DC charger socket.

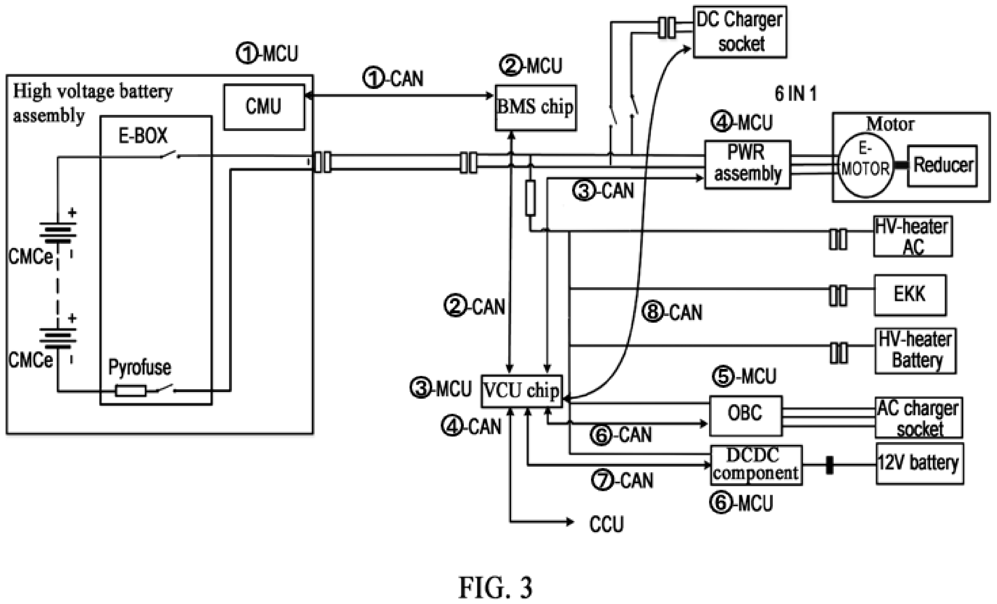

As shown in FIG. 3, the conventional electric vehicle employs separate BMS chip (②-MCU in FIG. 3) and VCU chip (③-MCU in FIG. 3), and the power assembly 130 also employs a separate control chip. For example, the PWR assembly in FIG. 3 represents an inverter assembly including an inverter and an inverter control chip (④-MCU), and a DCDC assembly comprises a DC-DC converter and a DC-DC converter control chip (⑥-MCU). In addition, the on-board charger employs a separate on-board charger control chip (⑤-MCU), and the battery monitoring chip of the battery management unit employs one chip (① -MCU). However, as shown in FIG. 2 in the present application, the function of the BMS chip, the function of the VCU chip, the function of the inverter control chip and the function of the DC-DC converter control chip are integrated into the integrated control module 110, so that one chip may be employed, the use of at least three chips may be reduced, and the cost may be lower.

As shown in FIG. 3, since separate control chips are used in the conventional electric vehicle, a communication line, e.g., the ①-CAN in FIG. 3, is needed between the battery monitoring chip (CMU) and the BMS chip, a transmission line, e.g., ②-CAN in FIG. 3, is needed between the BMS chip and the VCU chip, a communication line, e.g., ③-CAN in FIG. 3, is needed between the VCU chip and the PWR assembly, a communication line, e.g., ④-CAN in FIG. 3, is needed between the VCU chip and the central control chip CCU, a communication line, e.g., ⑥-CAN in FIG. 3, is needed between the VCU chip and the on-board charger assembly (OBC), a communication line, e.g., ⑦-CAN in FIG. 3, is needed between the VCU chip and the DCDC component, and a communication line, e.g., ⑧-CAN in FIG. 3, is needed between the VCU chip and the DC charger socket. However, in the present application, the function of the BMS chip, the function of the VCU chip, the function of the inverter control chip and the function of the DC-DC converter control chip are integrated into the integrated control module 110. In order to achieve the same communication function as FIG. 3, the present application, as shown in FIG. 2, only requires a communication line (①-CAN in FIG. 2) between the battery monitoring chip and the integrated control module 110, a communication line (②-CAN in FIG. 2) between the integrated control module 110 and the DC charger socket, a communication line (③-CAN in FIG. 2) between the integrated control module 110 and the on-board charger assembly, and a communication line (④-CAN in FIG. 2) between the integrated control module 110 and the central control chip CCU. At least three communication lines may be reduced, resulting in a simpler wiring.

The present application further provides an electric vehicle including the electronic drive control system in each of the above-described embodiments.

The technical features described above may be arbitrarily combined. Although not all possible combinations of these features are described, any combinations of these features should be considered as being covered by the present specification, as long as such combinations do not contradict with each other.

Finally, it should be noted that the above embodiments are only intended to illustrate, not to limit the technical solutions of the present application.

## Claims

1. An electronic drive control system (100), comprising: a power assembly (130), and an integrated control module (110) that integrates a battery management unit, a vehicle control unit, and a control unit of the power assembly (130) into one chip;
wherein the vehicle control unit connects the battery management unit to the control unit of the power assembly (130), the battery management unit is communicatively connected to a battery assembly (200) of an electric vehicle, the control unit of the power assembly (130) is electrically connected to the power assembly (130), and the power assembly (130) is electrically connected to a motor (300) of the electric vehicle.

2. The electronic drive control system (100) according to claim 1, wherein the power assembly (130) comprises an inverter, and the control unit of the power assembly (130) comprises an inverter control unit; and
wherein the inverter control unit is electrically connected to the inverter, and the inverter is connected to the motor (300) of the electric vehicle.

3. The electronic drive control system (100) according to claim 1 or 2, wherein the power assembly (130) further comprises a DC-DC converter, and the control unit of the power assembly (130) comprises a DC-DC converter control unit; and
wherein the DC-DC converter control unit is electrically connected to the DC-DC converter, and the DC-DC converter is connected to a low-voltage component of the electric vehicle.

4. The electronic drive control system (100) according to any of claims 1 -3, further comprising: an on-board charger assembly communicatively connected to the vehicle control unit.

5. The electronic drive control system (100) according to any of the previous claims, further comprising:
a first CAN communication line through which the on-board charger assembly is communicatively connected to the vehicle control unit.

6. The electronic drive control system (100) according to any of the previous claims, further comprising:
a second CAN communication line through which the battery management unit is communicatively connected to the battery assembly (200) of the electric vehicle.

7. The electronic drive control system (100) according to any of the previous claims, further comprising:
a third CAN communication line through which the vehicle control unit is connected to a central control system of the electric vehicle.

8. The electronic drive control system (100) according to any of the previous claims, further comprising:
a fourth CAN communication line;
wherein the vehicle control unit is connected to a DC charger socket of the electric vehicle through the fourth CAN communication line.

9. The electronic drive control system (100) according to any of the previous claims, wherein the integrated control module is an MCU chip.

10. An electric vehicle, comprising: the electronic drive control system (100) according to any of claims 1-9.
